# EUROPÄISCHE PATENTSCHRIFT

(11) **EP 0 643 896 B1**
(45) Veröffentlichungstag und Bekanntmachung des Hinweises auf die Patenterteilung: **29.12.1997**
(21) Anmeldenummer: 93912883.1
(22) Anmeldetag: 04.06.1993
(51) Int. Cl.: H04N 1/10

(54) **KOPIERVORRICHTUNG**
COPIER
PHOTOCOPIEUR

(30) Priorität: 04.06.1992 DE 4218506
(43) Veröffentlichungstag der Anmeldung: 22.03.1995
(73) Patentinhaber: KIRMEIER, Josef, D-85416 Langenbach (DE)
(72) Erfinder: KIRMEIER, Josef, D-85416 Langenbach (DE)
(74) Vertreter: Schulz, Rütger, Dr. Dipl.-Phys.
(86) Internationale Anmeldenummer: EP9301411
(87) Internationale Veröffentlichungsnummer: WO9325040

(56) Entgegenhaltungen:
- EP-A- 0 124 098
- EP-A- 0 291 000
- EP-A- 0 544 601
- WO-A-85/02274
- WO-A-92/20182
- DE-A- 3 134 705
- US-A- 3 830 975
- US-A- 4 150 873
- US-A- 4 272 187

## Beschreibung

Die vorliegende Erfindung bezieht sich auf eine Kopiervorrichtung mit einer Scanner-Kamera zum Abtasten von für den Kopiervorgang beleuchtbaren Vorlagen mit einer Optik zur lichtoptischen Projektion der Vorlage und mit einem fotoelektrischen Zeilensensor, an dessen Ausgang die elektrischen Signale der einzelnen Abtastpunkte verfügbar sind.

Aus der EP-A-124098 ist eine Kopiervorrichtung bekannt, mit der mittels einer Scanner-Kamera mit fotoelektrischem Zeilensensor eine zu kopierende beleuchtete Vorlage abzutasten ist. Die Vorlage liegt dabei mit ihrer abzutastenden Fläche nach oben und die Scanner-Kamera ist über dieser Vorlage in einem entsprechenden Abstand angeordnet. Die Scanner-Kamera besitzt eine zur Scharfeinstellung verstellbar Optik zur lichtoptischen Projektion der Vorlage in eine vorgegebene Bildebene der Kamera. In dieser Bildebene wird mittels des fotoelektrischen Zeilensensors zeilenweise das projizierte Bild abgetastet.

Diese bekannte Scanner-Kamera hat einige Zusatzeinrichtungen, wie z.B. eine Vorrichtung zum Scharfeinstellen des Bildes der beleuchteten Vorlage in der Bildebene der Kamera. Diese Einrichtung umfaßt eine optisch abbildbare Musterstruktur mit einer zugehörigen Beleuchtungsquelle, mit der diese Musterstruktur so zu beleuchten ist, daß mittels der Optik durch Einstellung derselben in der Ebene der Vorlage ein auf seine Schärfe hin überprüfbares Bild dieser Musterstruktur zu erzeugen ist. Es ist ein Tastenfeld mit einzelnen Tasten vorgesehen, durch deren Betätigung einzelne Arbeitsvorgänge der Kamera aktiviert werden können.

Das Ausgangssignal des Zeilensensors der Kamera wird einem zugehörigen Computer zugeführt, in dem der vorgesehenen Software entsprechend die Signalverarbeitung der Sensorsignale durchgeführt wird. Bei der bekannten Scanner-Kamera ist ein CCD-Zeilensensor vorgesehen und die Ausgangssignale des Zeilensensors werden in dem Computer in eine vorgesehene Computer-Sprache umgesetzt und verarbeitet. Vom Computer werden im ASCI-Format aufbereitete Signale des Scanner-Vorganges geliefert, die für telefaxähnliche Übermittlung an einen entfernten Empfangsort geeignet sind. Das ASCI-Signal kann aber auch einem jeden Drucker zugeführt werden, von dem dann Ausdrucke des Kopiervorganges zu erhalten sind.

Grundsätzlich sind zwar Computer heutigentags so verbreitet, daß für die Kopiervorrichtung aus der o.g. Druckschrift im Regelfall nicht außerdem noch ein Computer angeschafft werden muß, sondern auf ein für andere Verwendungszwecke schon vorhandenes Gerät zurückgegriffen werden kann. Obwohl heutige Computer relativ schnell arbeiten, ist die mit einem solchen bekannten System erreichbare Kopiergeschwindigkeit nur bedingt zufriedenstellend.

In der älteren Patentanmeldung DE-A-4 113 594 vom 25.4.1991 sind in allen Einzelheiten Zweck und Ausführungsformen einer Scanner-Kamera beschrieben. Mit den bekannten Kopiervorrichtungen, die in erster Linie für das Kopieren von Einzelblättern bestimmt sind, lassen sich Kopien aus Büchern und dgl. nur sehr umständlich und auch nur mit geringem Tempo herstellen. Für dieses Problem liefert auch die aus der o.g. EP-A-124098 bekannte Kopiervorrichtung Abhilfe, indem ein Buch, dessen einzelne Seiten zu kopieren sind, auf einen Tisch gelegt wird und mit einer oberhalb des Tisches angebrachten Scanner-Kamera das Kopieren durchgeführt wird. Das Buch bleibt auf dem Tisch liegen und es werden nur die einzelnen Seiten umgeblättert. Bei einer solchen Arbeitsweise können pro Zeiteinheit eine relativ große Anzahl Seiten kopiert werden, z.B. wenn man zunächst nur die ungeradzahligen Seiten und erst nachfolgend die geradzahligen Seiten kopiert, nachdem man für diesen Vorgang das Buch und die Scanner-Kamera nur ein einziges Mal neu auszurichten brauchte. Bei einem so raschen Wechsel der Vorlage spielt bereits die Arbeitsgeschwindigkeit der Kopiervorrichtung eine nicht unwesentliche Rolle, nämlich so wie beim Kopieren von einzelnen Blättern in einem üblichen Kopierer.

Mit einer Kopiervorrichtung der vorliegenden Erfindung wird eine besonders vereinfachte Auswertung der Sensorsignale durchgeführt. Der Erfindung liegt der Gedanke zugrunde, jedwede entbehrliche Signalverarbeitung zu vermeiden und die Sensor-Ausgangssignale direkt in die Bildpunkte einer ausgedruckten Kopie zu transformieren.

Schon lange bekannte Zeilensensoren, die z.B. nach dem Prinzip einer CCD-Anordnung (Charge Coupled Device) arbeiten, liefern an ihrem Ausgang seriell, d.h. zeitlich nacheinander, die Sensorsignale der einzelnen Bildpunkte der Zeile. Die einzelnen Bildpunktelemente eines solchen Zeilensensors liefern in der Regel elektrische Signale, die dem Helligkeitswert des kopierten Bildpunktes entsprechen. Für eine Schwarz-Weiß-Kopie genügt es dann bei der weiteren Signalverarbeitung mit einem Pegeldiskriminator eine Ja/Nein-Entscheidung zu treffen, nämlich ob es sich um einen weißen oder einen schwarzen Bildpunkt handelt. Ist ein Kopieren mit Pegelzwischenwerten des jeweils einzelnen Bildpunktes gewünscht, wird das vom Sensor gelieferte Analogsignal benutzt, und zwar in der Regel in Digitalwerte umgesetzt.

Es sind auch bereits Zeilensensoren bekannt geworden, die die Signalwerte der einzelnen Bildpunkte der Zeile parallel an den entsprechend zahlreichen Ausgangsanschlüssen des Zeilensensors liefern. Mit einem solchen Sensor mit Parallelausgabe lassen sich natürlich erheblich höhere Abtastgeschwindigkeiten erreichen.

Bei der vorliegenden Erfindung ist als Besonderheit vorgesehen, daß die den Bildpunkten entsprechenden Ausgangssignale der Sensorzeile direkt einem Drucker, und zwar direkt dem Signaleingang des Druckermechanismus des Druckers zugeführt werden. Übliche Drucker haben Geräte-Signaleingänge, die nur in bestimmtem Format vorliegende Signale aufnehmen und ausdrucken können. Bei der vorliegenden Erfindung geht man also direkt auf den Signaleingang des Druckerkopfes eines Nadeldruckers bzw. des Strahlmodulators eines Thermo- oder Laserdruckers.

Bei der Erfindung ist aber durch eine noch weitere Maßnahme für eine störungsfreie Realisierung dieses vorgenannten Gedankens Sorge getragen, daß keine Komplikationen dadurch auftreten, daß der Zeitablauf der Arbeitsweise des Zeilensensors gegenüber dem Zeilendurchgang des jeweiligen Druckers auch unterschiedlich sein kann. Der Bildpunkttakt des Zeilensensors kann durchaus etwas verschieden sein vom Bildpunkttakt des Druckerkopfes. Es ist deshalb bei der Erfindung vorgesehen, in die direkte Verbindung zwischen dem elektrischen Ausgang des Zeilensensors und dem Signaleingang des Druckermechanismus zusätzlich zu dem bereits angegebenen Pegeldiskriminator für Schwarz-Weiß-Kopie und dem Analog-/Digital-Wandler für Grauwerte-Kopie, (nur) noch einen Daten-Zwischenspeicher einzufügen. Dieser Zwischenspeicher dient soweit lediglich dazu, die Taktfolge des Abrufens der Signale durch den Druckermechanismus unabhängig zu machen vom Takt des Eingangs der Zeilen-Bildpunktsignale, d.h. Zeit-"Unebenheiten" auszugleichen..

Im Falle eines Zeilensensors mit parallelem Ausgang, d.h. mit einer Vielzahl von Signalausgängen, dient der Zwischenspeicher auch dazu, das zeitlich parallele Anfallen der Bildpunktsignale einer Zeile umzusetzen in die vom Druckermechanismus verarbeitbare Punktfolge einer Druckzeile.

Gemäß diesem Gedanken der Erfindung erfolgt also das Ausdrucken der Zeilen einer Kopie simultan mit dem Abtasten der entsprechenden Zeile der Vorlage.

Die erfindungsgemäß unmittelbare Verbindung des Ausgangs der Sensorzeile mit dem Eingang des Druckermechanismus schließt nicht aus, daß noch ein Signalverstärker in diese Verbindung eingefügt ist, denn auch in diesem Falle geht das Signal vom Zeilensensor direkt in den Druckermechanismus und nicht an den üblichen Signaleingang des Druckers, der ein normiertes Format (z.B. ASCI) des Signals erfordert.

Besonders vorteilhaft ist die Kombination der voranstehend beschriebenen rasch arbeitenden Signalumsetzung in gedruckte Zeilen mit einem besonders rasch und dabei störungs-/schwankungsfrei arbeitenden hydraulischen Antrieb für den Vorschub des Zeilensensors.

Die Erfindung in ihren verschiedenen Aspekten ist in den Ansprüchen 1-6 beschrieben.

Weitere Erläuterungen gehen aus der Beschreibung zu den Figuren hervor.
- Figur 1a: zeigt ein Prinzipbild einer Scanner-Kamera wie sie bekannt ist und wie sie in der älteren o.g. Anmeldung, dort dann mit vielen Varianten, näher beschrieben ist,
- Figur 1b: zeigt eine Aufsicht zur Seitenansicht der Fig. 1a,
- Figur 2: zeigt das Blockdiagramm mit der erfindungsgemäßen direkten Verbindung von ZeilensensorAusgang zum Signaleingang des Druckermechanismus eines prinzipiell üblichen Druckers und die
- Figuren 3a bis 3d: zeigen Einzelheiten zu besonderen Ausgestaltungen des Antriebs eines Zeilensensors.

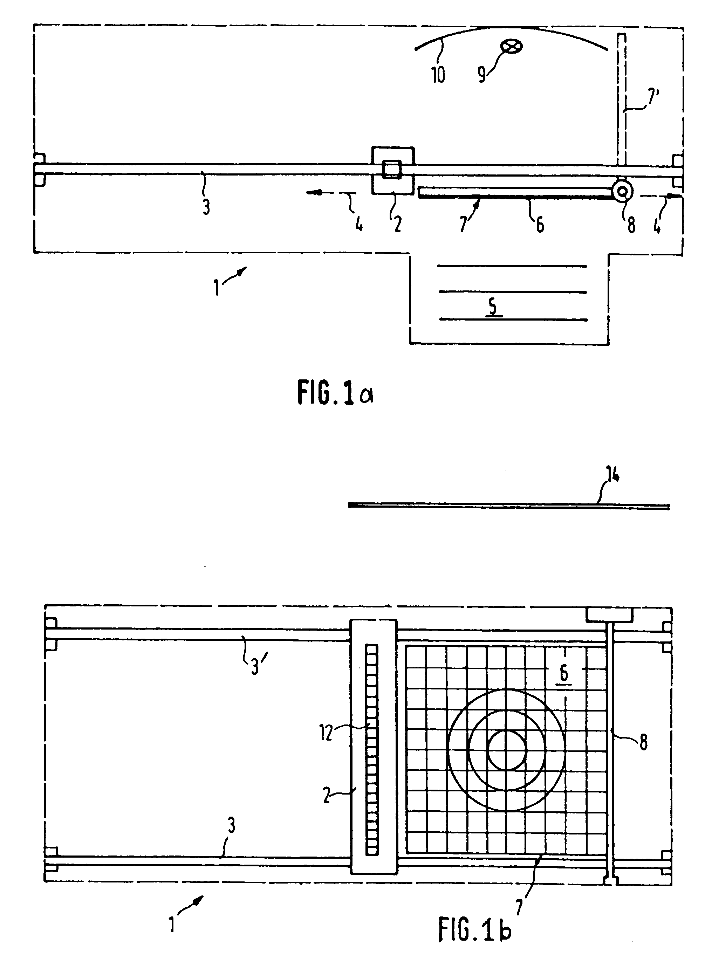

In den Figuren 1a und 1b ist mit 1 eine Scanner-Kamera bezeichnet, die einen Zeilensensor 2 mit Sensorelementen 12 besitzt, der auf (parallelen) Führungen 3, 3' horizontal mit entsprechendem Antrieb zu bewegen ist. Die Ausrichtung der Sensorzeile ist senkrecht zur Ebene der Figur 1. Mit 4 ist die Bildebene angedeutet. Die Optik, ein für den Einzelfall ausgewähltes Objektiv, ist mit 5 bezeichnet. Zwei Führungen 3, 3' sind zweckmäßigerweise vorgesehen, damit das Feld der Abbildung in der Bildebene 4 von störenden Konstruktionsteilen freibleibt und exakte Führung gewährleistet ist.

Für die Scharfeinstellung der Kamera ist eine Musterstruktur 6 vorgesehen, die sich auf der in der Bildebene 4 liegenden Oberfläche einer transparenten, beispielsweise aus durchsichtigem Glas bestehenden Platte 7 befindet. Mit 7' ist die weggeklappte Stellung der Platte 7 angedeutet. Mit 8 ist die andeutungsweise dargestellte Dreh- bzw. Schwenkachse der Platte 7 bezeichnet. Während des Scharfeinstellens befindet sich die Platte 7 in der in der Figur la dargestellten Stellung. Die Lichtquelle 9 und die Fokussierung 10 dienen der Ausleuchtung der Musterstruktur.

Mit 14 ist die Gegenstandsebene bezeichnet, in der sich die zu kopierende Vorlage befindet und auf die die Kamera scharf eingestellt wird.

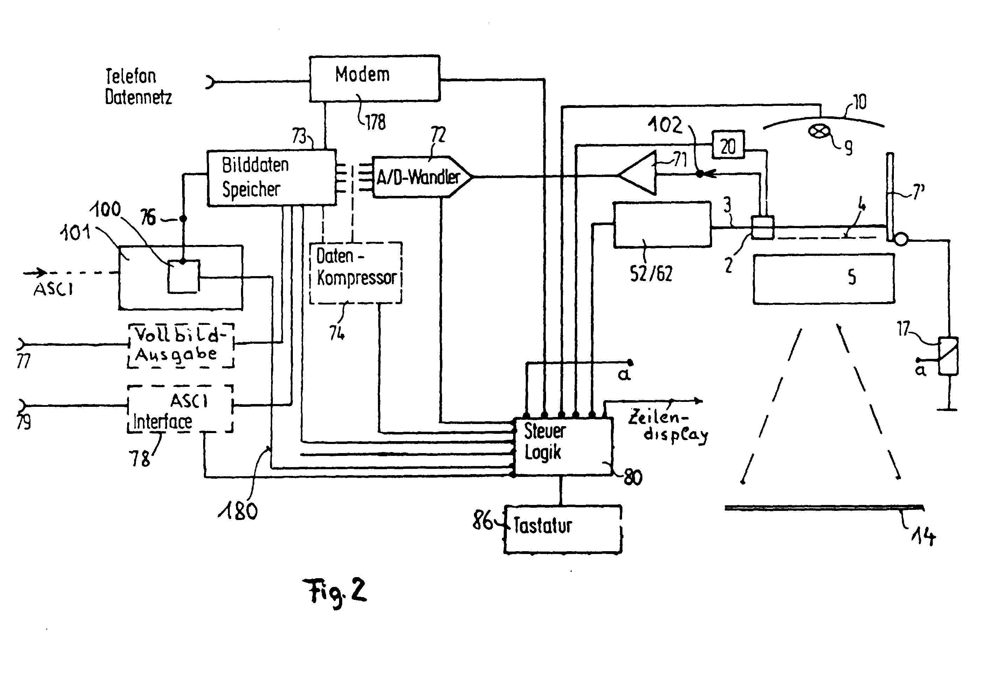

In der Figur 2 mit Bezugszeichen der Figur 1 beschriebene Einzelheiten haben die schon beschriebene Bedeutung. Mit 52/62 sind der mechanische Antrieb des Zeilensensors 2 und mit 17 der Antrieb für das Wegklappen des Spiegels 7 bezeichnet.

Von der mit 86 bezeichneten Tastatur ausgehend werden von der Bedienungsperson die einzelnen Arbeitsvorgänge der Kopiervorrichtung aktiviert. Elektronisch besorgt dies die Steuerlogik 80. So wird von der Steuerlogik 80 über eine Elektronik 20 die Arbeitsweise der Sensorzeile 2 gesteuert. Die Steuerlogik steuert auch den mechanischen Antrieb 52/62 für den "zeilenweisen" Vorschub der Sensorzeile 2. Die Steuerleitung 180 ist mit dem Drucker(-mechanismus) verbunden.

Die bei Abtasten der beleuchteten Vorlage in der Gegenstandsebene 14 vom Zeilensensor 2 gelieferten elektrischen Signale liegen an dessen Ausgang 102 an.

Über einen ggfs. vorgesehenen Vorverstärker 71 ist dieser Ausgang 102 direkt mit dem Schaltungspunkt 76 verbunden, an den erfindungsgemäß der Signaleingang des Druckermechanismus bzw. Druckerkopfes 100 des Druckers 101 anzuschließen ist. Wie ersichtlich, sind in diese direkte Verbindung der Punkte 102 und 76 miteinander im wesentlichen nur noch der Schaltungsteil 72 und der Bilddaten-Zwischenspeicher 73 eingefügt. Es erfolgt auf diesem Wege keine Normierung des Zeilensensorsignals.

Das Schaltungsteil 72 ist, wie schon oben ausführlich beschrieben, entweder ein Diskriminator für Schwarz-Weiß-Kopie oder ein Analog-/Digital-Wandler für Kopie mit Halbtönen der einzelnen Bildpunkte. Der Bilddaten-Zwischenspeicher 73 führt eine auf das Maß eines vorgegebenen Zeitbereiches bemessene Zwischenspeicherung der momentanen Ausgangssignale des Schaltungsteils 72 aus. Der Speicher macht z.B. die Taktfolge des Druckens der Bildpunkte unabhängig von der zeitlichen Folge des Eingangs der Bildpunktsignale. Es handelt sich dabei z.B. um solche Zwischenspeicher-Zeiten, die wesentlich kleiner sind als die Zeitdauer des Auslesens einer Zeile.

Es kann auch noch ein Daten-Kompressor 74 vorgesehen sein.

Am Eingang 76 für den Druckermechanismus 100 liegen die Signale an, die direkt, unmittelbar in gedruckte Bildpunkte umgesetzt werden. Dieser Druckermechanismus kann ein Nadeldruckerkopf sein. Es kann auch ein optischer Druckerkopf sein, der einen Licht-/Wärme-Strahl für Thermodruck oder einen Laserstrahl für Laserdruck liefert. Halbtöne können durch entsprechende Modulation der Druckintensität erzielt werden. Beim Thermodrucker ist dies eine schon lange bekannte Intensitätsmodulation mit mehr oder weniger Schwärzung des gedruckten Punktes. Neue Laserdrucker sind ebenfalls in der Lage verschieden dunkle Druckpunkte zu erzeugen.

Als Zeitbereich bzw. als Speicherzeit für den Zwischenspeicher 73 kann auch eine längere Zeit vorgesehen sein, z.B. die Zeitdauer des Abtastens von z.B. drei Zeilen, eines vollen Blattes oder auch von n Blättern. Zum Beispiel kann für eine Vollbild-Ausgabe der Anschluß 77 vorgesehen sein.

Ein gegebenenfalls außerdem noch vorgesehener ASCI-Ausgang ist mit 79 bezeichnet.

Insbesondere kann eine verlängerte Zwischenspeicher-Zeit vorgesehen sein, wie sie z.B. für ein Ausdrucken über eine Fax-Verbindung für eine Speicherung auf einer Bildplatte oder einem Magnetspeicher und dergleichen wegen deren langsameren Arbeitsgeschwindigkeit erforderlich ist.

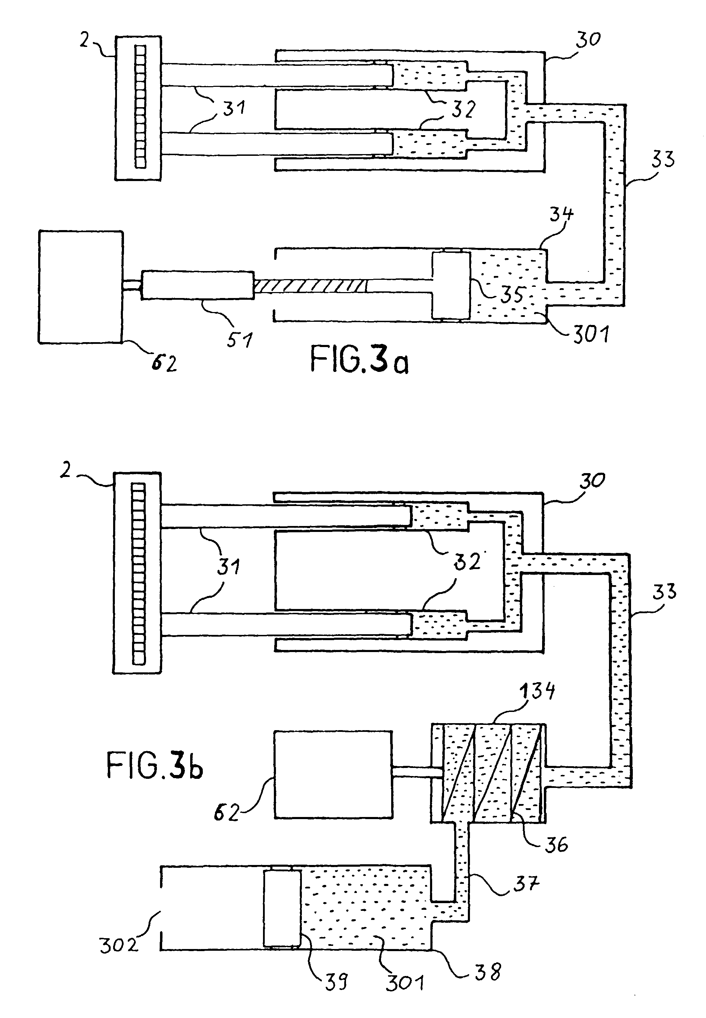

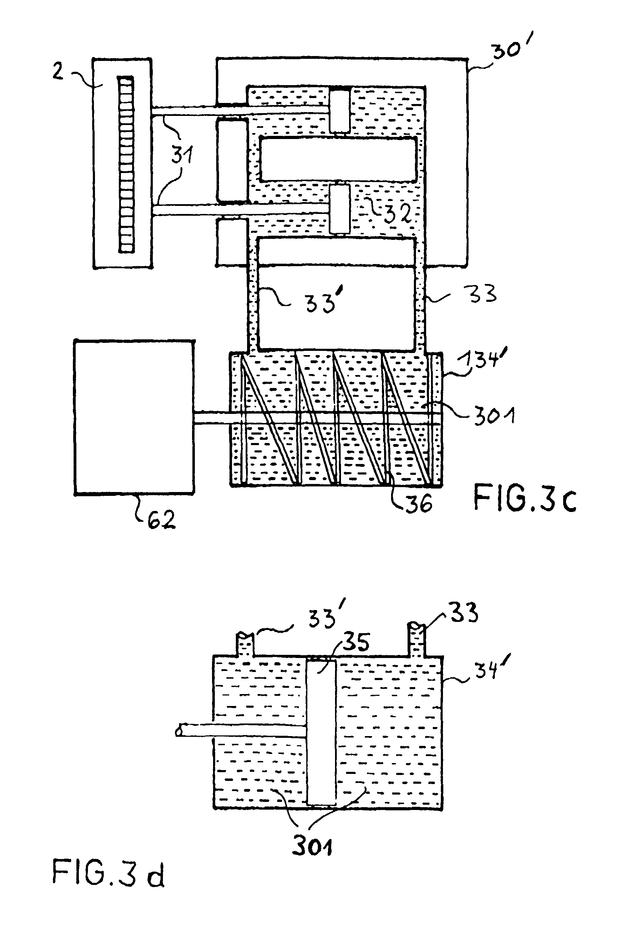

Um den Zeilensensor 2 besonders rasch und dabei auch erschütterungsfrei/exakt in der Bildebene der Kamera, und zwar insbesondere mit Geschwindigkeiten von mehr als 50 mm/sec, in seinen Führungen über die Bildebene hinweg verschieben zu können, ist gemäß einer Weiterbildung der Erfindung ein hydraulisches Antriebssystem gemäß den Figuren 3a, 3b oder 3c und 3d vorgesehen.

Von einer mit dem Stell-/Schrittmotor angetriebenen Geber-Zylinder-Kolbeneinheit 34, 35 wird ein Hydraulikmittel 301 in einer Leitungsverbindung 33 in Bewegung versetzt. In einer Nehmer-Kolbenzylindereinheit 30, 31, 32 verschiebt dieses Hydraulikmittel die z.B. zwei parallelen Kolben 31, mit denen der in seinen Führungen verschiebbare Zeilensensor 2 mechanisch gekoppelt ist. Dieser Antrieb ist frei von Schwingungen der Antriebsbewegung, wobei auch Dämpfungen zusätzlich vorgesehen sein können. Zwischen dem Motor 62 und dem Geberkolben 35 kann noch eine Visko-Federkupplung 51 oder dgl. eingefügt sein.

Dieses hydraulische Antriebssystem kann mit Druck in Richtung der Nehmereinheit 30, sie kann aber auch in Gegenrichtung durch Erzeugen von "Unterdruck" im Geberzylinder 34 betrieben werden. Der Zeilensensor 2 läßt sich so vom Motor 62 steuerbar angetrieben hin- und herverschieben.

Durch das Tandemsystem der Nehmereinheit 30 ist infolge des Hydraulikprinzips absolute Gleichheit und Gleichmäßigkeit des parallelen Antriebs des Zeilensensors 2 gewährleistet.

Es ist ein nicht harzendes Hydraulikmittel mit ausreichend hohem Siedepunkt zu verwenden. Durch Wahl der hydraulischen Übersetzung zwischen Geber- und Nehmereinheit lassen sich sogar auf 1 µm genaue Positionen und 1 µm-Schritte des Zeilensensors störungsfrei erzielen.

Eine Variante des Antriebssystems nach Fig. 3a ist in Fig. 3b gezeigt. Schon zur Fig. 3a beschriebene Einzelheiten der Fig. 3b gelten sinngemäß. Die Variante der Fig. 3b sieht zur Förderung des Hydraulikmittels eine in beiden Richtungen ihrer Achse fluidfördernde Förderschnecke 36 in einem Zylinder 134 der Gebereinheit vor. Der Motor 62 treibt hier die Rotation der Förderschnecke 36 an. Diese Variante ist für Verschieben des Zeilensensors in beiden Richtungen besonders geeignet. Mit 38 ist ein durch einen verschiebbaren Kolben 39 abgedichteter Ausgleichsbehälter mit einer Öffnung 302 bezeichnet.

Eine weitere Variante zeigen die Figuren 3c und 3d. Die Ausführung nach Fig. 3c entspricht im wesentlichen derjenigen nach Figur 3b. Beschriebene Einzelheiten der Figur 3b gelten so auch für die in Figur 3c gezeigte Ausführung, bei der jedoch der beschriebene Ausgleichsbehälter 38 entbehrlich ist. Die Gebereinheit 134', 36 ist hier eine zweiseitig fördernde Einrichtung und die Nehmereinheit 30', 31 ist entsprechend zweiseitig wirksam ausgebildet. Die jeweils zweiten Seiten von Gebereinheit und Nehmereinheit sind durch die hier vorgesehene zweite Ausgleichs-Verbindungsleitung 33' miteinander verbunden, so daß insgesamt stets volumenmäßiger Ausgleich vorliegt.

Die Figur 3d zeigt als Detailansicht eine Gebereinheit 34' mit doppelseitig wirkenden Kolben 35. Diese Gebereinheit nach Fig. 3d ist im Austausch gegen die mit Förderschnecke ausgebildete Gebereinheit 36 der Figur 3c zu verwenden und über die Leitungen 33 und 33' anzuschließen.

## Patentansprüche

1. Kopiervorrichtung mit einer Scanner-Kamera (1) zum Abtasten von für den Kopiervorgang beleuchtbaren Vorlagen,
mit einer einstellbaren Optik (5) zur lichtoptischen Projektion der Vorlage aus einer Gegenstandsebene (14) in eine vorgegebene Bildebene (4) der Kamera,
mit einem fotoelektrischen Zeilensensor (2), mit dem eine Bildpunkt-Abtastung einer vorgegebenen Projektionsfläche in dieser Bildebene (4) der Kamera durchführbar ist und an dessen Ausgang die elektrischen Signale der einzelnen Abtastpunkte verfügbar sind,
**gekennzeichnet dadurch, daß**
für ein Ausdrucken einer Kopie der Vorlage, das simultan mit den im Kopiervorgang am Ausgang (102) des Zeilensensors (2) anfallenden Signalen erfolgt, dieser Ausgang (102) des Zeilensensors (2) bei Schwarz-Weiß-Kopie über einen Pegeldiskriminator (72) oder beim Kopieren mit Pegel-Zwischenwerten des Ausgangssignals über einen Analog-/Digitalwandler (72) und über einen Bilddaten-Zwischenspeicher (73) unmittelbar mit dem Signaleingang (76) des Druckmechanismus (100) eines vorgesehenen Druckers (101) verbunden ist, und daß der Zeilensensor (2) mit einem hydraulischen Antriebssystem bewegbar ist, das eine von einem Stell-/Schrittmotor (62) angetriebene Geber-Zylinder-Kolbeneinheit (34, 35) und eine mit dem Zeilensensor (2) mechanisch verbundene Nehmer-Kolben-Zylindereinheit (30, 31) aufweist.

2. Kopiervorrichtung nach Anspruch 1,
**gekennzeichnet dadurch, daß**
in diese unmittelbare Verbindung von Zeilensensorausgang (102) und Eingang (76) des Druckermechanismus (100) noch ein Signalverstärker (71) eingefügt ist.

3. Kopiervorrichtung nach Anspruch 1 oder 2,
**gekennzeichnet dadurch, daß**
für den Ablauf des simultanen Ausdruckens der Kopie gegenüber dem Ablauf des Abtastvorgangs ein vorgegebener Bereich für einen zeitlichen Versatz dieser beiden Abläufe vorgesehen ist.

4. Kopiervorrichtung nach einem der Ansprüche 1 bis 3,
**dadurch gekennzeichnet, daß**
die Nehmer-Kolben-Zylindereinheit (30, 31) zwei parallel laufende Kolben (31) aufweist, die in Schub-/Zugverbindung mit dem zu verschiebenden Zeilensensor (2) sind.

5. Kopiervorrichtung nach einem der Ansprüche 1 bis 4,
**dadurch gekennzeichnet, daß**
dieses Antriebssystem eine angetriebene, ein Hydraulikmittel (301) steuerbar zweiseitig fördernde Einrichtung (134', 36) als Gebereinheit, eine erste (33) und eine zweite (33') hydraulische Verbindungsleitung und eine zweiseitig wirksame Nehmer-Kolben-Zylindereinheit (30', 31) umfaßt.

6. Kopiervorrichtung nach Anspruch 5,
mit einer doppelseitig wirksamen Geber Zylinder-Kolbeneinheit (34', 35).

## Claims

1. Copying device with a scanner camera (1) for scanning originals which can be illuminated for the copying process,
having an adjustable optical system (5) for optical projection of the original from an object plane (14) into a predetermined image plane (4) of the camera,
having a photoelectric line sensor (2), by means of which an image point scanning of a predetermined projection area in this image plane (4) of the camera can be performed, and at the output of which the electric signals of the individual scanning points are available,
characterised in that,
for a print out of a copy of the original, which occurs simultaneously with the signals that become available at the output (102) of the line sensor (2) during the copying process, this output (102) of the line sensor (2) is connected directly to the signal input (76) of the print mechanism (100) of a printer (101) which is provided, in the case of black-and-white copying by way of a level discriminator (72) or in the case of copying with intermediate value levels of the output signal by way of an analog/digital converter (72), and by way of an image data buffer memory (73),
and in that,
the line sensor (2) is moveable by means of a hydraulic drive system which has a master cylinder/piston unit (34, 35) driven by a positioning/stepping motor (62) and a slave piston/cylinder unit (30, 31) mechanically connected to the line sensor (2).

2. Copying device according to claim 1,
characterised in that
a signal amplifier (71) is additionally provided in this direct connection of line sensor output (102) and input (76) of the print mechanism (100).

3. Copying device according to claim 1 or 2,
characterised in that,
for the process of simultaneous print out of the copy there is provided relative to the scanning process a predetermined range for a temporal displacement of the two processes.

4. Copying device according to any of claims 1 to 3,
characterised in that,
the slave piston/cylinder unit (30, 31) has two parallel running pistons (31) which are in pushing/pulling connection with the line sensor (2) to be displaced.

5. Copying device according to any of claims 1 to 4,
characterised in that,
this drive system comprises, as master unit, a driven arrangement (134', 36) which controllably transports a hydraulic medium (301) on two sides, a first (33) and a second (33') hydraulic connection line and a slave piston/cylinder unit (30', 31) which works on two sides.

6. Copying device according to claim 5,
with a master cylinder/piston unit (34', 35) which works double sidedly.

## Revendications

1. Dispositif de copie avec une caméra scanner (1) pour le balayage d'originaux pouvant être exposés en vue de la copie, avec une optique (5) réglable pour la projection optique du document à partir d'un plan d'objet (14) dans un plan d'image (4) donné de la caméra, avec un capteur de lignes (2) photo-électrique au moyen duquel il peut être réalisé un balayage de points d'image d'une surface de projection donnée, dans ce plan d'image (4) de la caméra, et à la sortie duquel les signaux électriques des différents points de balayage sont disponibles, caractérisé en ce que pour l'impression d'une copie de l'original, qui s'effectue simultanément avec les signaux parvenant à la sortie (102) du capteur de lignes (2), au cours de la copie, cette sortie (102) du capteur de lignes (2) étant reliée directement à l'entrée de signaux (76) du mécanisme d'impression (100) d'une imprimante (101) prévue, en cas de copie blanc-noir par un discriminateur de niveau (72) ou, en cas de copie avec des valeurs intermédiaires de niveau du signal de sortie, par un convertisseur analogique/numérique (72) et par une mémoire intermédiaire de données d'image (73), et en ce que le capteur de lignes (2) est déplaçable au moyen d'un système d'entraînement hydraulique, qui comporte une unité à cylindre et piston captrice (34, 35), entraînée par un servo-moteur pas à pas (62), et une unité à cylindre et piston réceptrice (30, 31), reliée mécaniquement au capteur de lignes (2).

2. Dispositif de copie selon la revendication 1, caractérisé en ce que dans cette liaison directe entre la sortie (102) du capteur de lignes et l'entrée (76) du mécanisme d'imprimante (100) est encore inséré un amplificateur de signaux (71).

3. Dispositif de copie selon la revendication 1 ou 2, caractérisé en ce que pour le déroulement de l'impression simultanée de la copie par rapport au déroulement de l'opération de balayage, il est prévu une plage donnée pour un décalage dans le temps de ces deux opérations.

4. Dispositif de copie selon l'une des revendications 1 à 3, caractérisé en ce que l'unité à cylindre et piston (30, 31) réceptrice comporte deux pistons (31) se déplaçant en parallèle, qui sont en liaison de poussée et de traction avec le capteur de lignes (2) à déplacer.

5. Dispositif de copie selon l'une des revendications 1 à 4, caractérisé en ce que ce système d'entraînement comprend un dispositif (134', 36) entraîné, servant d'unité captrice, déplaçant des deux côtés, de manière commandée, un moyen hydraulique (301), une première (33) conduite de liaison hydraulique et une deuxième (33') conduite de liaison hydraulique, ainsi qu'une unité à cylindre et piston réceptrice (30, 31) opérant des deux côtés.

6. Dispositif de copie selon la revendication 5, avec une unité à cylindre et piston captrice (4', 34', 35) opérant des deux côtés.
